# EUROPÄISCHE PATENTSCHRIFT

(11) **EP 4 278 028 B1**
(45) Veröffentlichungstag und Bekanntmachung des Hinweises auf die Patenterteilung: **18.03.2026**
(21) Anmeldenummer: 21831049.8
(22) Anmeldetag: 16.12.2021
(51) Int. Cl.: C23C 24/04, B23K 26/14, B23K 26/34, B29C 64/153, B33Y 10/00, H01M 8/00, C23C 24/10, C23C 4/11, B23K 103/00, B33Y 80/00, F01D 5/28, H01M 8/0232, H01M 8/0236, H01M 8/0245

(54) **ARTIKEL MIT WÄRMEDÄMMENDEM BESCHICHTUNGSSYSTEM UND HERSTELLUNGSVERFAHREN DAFÜR**
ARTICLE WITH A THERMAL INSULATION COATING SYSTEM AND PRODUCTION METHOD THEREFOR
ARTICLE AVEC UN SYSTÈME DE REVÊTEMENT D'ISOLATION THERMIQUE ET PROCÉDÉ DE FABRICATION DE CELUI-CI

(30) Priorität: 14.01.2021 DE 102021200321
(43) Veröffentlichungstag der Anmeldung: 22.11.2023
(73) Patentinhaber: Forschungszentrum Jülich GmbH, 52425 Jülich (DE)
(72) Erfinder: DOMMANN, Christoph, 53129 Bonn (DE); MACK, Daniel Emil, 50931 Köln (DE); VASSEN, Robert, 52134 Herzogenrath (DE); TANDLER, Martin, 41751 Viersen (DE)
(74) Vertreter: Gille Hrabal Partnerschaftsgesellschaft mbB Patentanwälte
(86) Internationale Anmeldenummer: PCT/EP2021/086149
(87) Internationale Veröffentlichungsnummer: WO 2022/152495

(56) Entgegenhaltungen:
- EP-A1- 1 645 652
- EP-A2- 1 295 964
- WO-A1-2016/060799
- US-B2- 7 510 743
- KUMAR NITISH ET AL: "Columnar Thermal Barrier Coatings Produced by Different Thermal Spray Processes", JOURNAL OF THERMAL SPRAY TECHNOLOGY, ASM INTERNATIONAL, MATERIALS PARK, US, vol. 30, no. 6, 6 July 2021 (2021-07-06), pages 1437 - 1452, XP037539763, ISSN: 1059-9630, [retrieved on 20210706], DOI: 10.1007/S11666-021-01228-5

## Beschreibung

Die Erfindung betrifft ein System mit einer keramischen Wärmedämmschicht nach Anspruch 1 und ein Verfahren zur Herstellung des Systems nach Anspruch 11.

Komponenten von Turbinenschaufeln in Flugzeugtriebwerken und Komponenten von stationären Gasturbinen können Temperaturen von mehr als 1000°C oder sogar 2000°C ausgesetzt sein. Derartige Komponenten werden durch Wärmedämmschichten vor Hitze geschützt. Die vorliegende Erfindung betrifft solche Wärmedämmschichten.

Durch Aufheizen und Abkühlen von solchen Komponenten können zerstörerische thermische Spannungen auftreten. Wärmedämmschichten können daher säulenartig aufgebaut sein, um das Auftreten von thermischen Spannungen zu reduzieren.

Die Druckschrift WO 03/087422 A1 offenbart die Herstellung einer Wärmedämmschicht mit säulenartigen Strukturen durch ein Aufdampfverfahren (EB-PVD) sowie durch Plasmaspritzen (LPPS). Die durch Plasmaspritzen hergestellten säulenartigen Strukturen verlaufen unregelmäßig, d. h., der Durchmesser variiert deutlich und der Verlauf kann von einem im Wesentlichen geradlinigen Verlauf abweichen. Die Säulen sind ungleichmäßig verteilt angeordnet. Bei der Innenseite der Wärmedämmschicht, also beim Substrat, gibt es keine Spalte zwischen Säulen. Der unregelmäßige Verlauf und die ungleichmäßige Verteilung der Säulen verdeutlichen, dass es durch das aus der Druckschrift WO 03/087422 A1 bekannte Plasmaspritzen nicht möglich ist, einzelne Säulen kontrolliert herstellen zu können.

Die Druckschrift EP 2 439 306 A1 lehrt, keramisches Material in einem Plasmastrahl wenigstens teilweise zu verdampfen, um eine Wärmedämmschicht mit säulenartiger Struktur auf einem metallischen Substrat zu erzeugen. Es wird thermisches Plasmaspritzen, Niederdruck-Plasmaspritzen (LPPS) oder Plasma Spray - Physical Vapor Deposition (PS-PVD) vorgeschlagen. Die in der Druckschrift EP 2 439 306 A1 dargestellten säulenartigen Strukturen entsprechen den säulenartigen Strukturen, die in der Druckschrift WO 03/087422 A1 dargestellt werden.

Die Druckschrift WO 00/37711 A1 offenbart, Wärmedämmschichten mit kolumnaren Strukturen durch Aufdampfverfahren (EB-PVD) oder durch Gasphasenabscheidung (CVD) herzustellen. Eine mikroskopische Aufnahme von durch Gasphasenabscheidung hergestellten Wärmedämmschichten mit kolumnarer Struktur zeigt sehr unregelmäßige Verläufe von säulenartigen Strukturen. Bei der besonders problematischen Innenseite der Wärmedämmschicht gibt es kaum Zwischenräume zwischen den Säulen.

Die Druckschrift US 5,238,752 A offenbart das Herstellen einer Wärmedämmschicht durch Elektronenstrahlgestützte Physikalische Gasphasenabscheidung (EB-PVD) mit säulenartiger Kornstruktur. Aus der Angabe Kornstruktur ist zu schließen, dass die Säulen porös sind.

Die EP 1 295 964 A2 offenbart eine zweischichtige Wärmedämmschicht. Auf einem Substrat befindet sich eine mittels Luftplasmaspritzen aufgebrachte erste Schicht. Auf der ersten Schicht befindet sich eine zweite Schicht, die eine säulenartige Struktur hat. US 7 510 743 B2 offenbart ein Verfahren, bei dem eine Trägerstruktur zum Festhalten eines keramischen Isoliermaterials auf einem Substrat durch Abscheidung durch ein strukturiertes Maskierungsmaterial hindurch gebildet wird. WO 2016 / 060 799 A1 beschreibt Verfahren zur additiven Laserfertigung, bei denen mehrere Pulverschichten auf eine Arbeitsfläche aufgebracht werden und eine erste Laserenergie auf eine erste Pulverschicht und eine zweite Laserenergie auf eine zweite Pulverschicht aufgebracht wird. EP 1 645 652 A1 offenbart ein Verfahren zur Herstellung eines Schichtsystems, bei dem eine äußere Schicht zusammen mit durchgehenden Verankerungsmitteln oder inneren Verankerungsmitteln schichtweise erzeugt wird. KUMAR, N. et al.: Columnar Thermal Barrier Coatings Produced by Different Thermal Spray Processes (doi: 10.1007/s11666-021-01228-5) beschreibt eine Wärmedämmschicht mit Säulen, die einander beim Substrat kontaktieren.

Ein Verfahren zum Reparieren einer Komponente einer Turbomaschine durch Laserbeschichtung ist aus der Druckschrift EP 2 892 686 B1 bekannt. Es wird ein Laserstrahl verwendet, um dessen Oberfläche zu reparieren.

Es ist Aufgabe der Erfindung, eine langlebige Wärmedämmschicht zu schaffen. Es ist außerdem Aufgabe der Erfindung, ein Verfahren zur Herstellung einer solchen Wärmedämmschicht anzugeben.

Die Aufgabe der Erfindung wird durch eine Wärmedämmschicht mit den Merkmalen des ersten Anspruchs gelöst. Ein Verfahren zur Herstellung einer Wärmedämmschicht umfasst die Merkmale des Nebenanspruchs.

Die Aufgabe der Erfindung wird durch ein System mit einem Substrat und einer auf dem Substrat aufgebrachten aus Säulen gebildeten Wärmedämmschicht gelöst. Die Säulen bestehen aus einem keramischen Material.

Eine Wärmedämmschicht im Sinne der vorliegenden Erfindung ist ein flächiger Bereich, der so beschaffen ist, dass das darunter befindliche Substrat vor Hitze geschützt wird. Durch die Wärmedämmschicht wird die Lebensdauer des Substrats deutlich erhöht. Diese Angabe bezieht sich auf den Fall, dass das Substrat regelmäßig Temperaturen von mehr als 1000 °C ausgesetzt wird. Wärmedämmschichten weisen daher eine Dicke von mehreren 100 µm auf, um hinreichend vor Hitze schützen zu können. Die Oberfläche der Wärmdämmschicht kann 10000 mm² und deutlich größer sein Die erfindungsgemäße Wärmedämmschicht kann in eine ansonsten anders beschaffenen Wärmedämmschicht integriert sein, weil mit dem erfindungsgemäßen Verfahren lokale Defekte einer Wärmedämmschicht repariert werden können. Die Oberfläche einer erfindungsgemäßen Wärmedämmschicht, also die Fläche oberhalb des Substrats, kann also beispielsweise lediglich wenige 10 mm², so zum Beispiel 5 mm x 5 mm, also 25 mm², groß sein. Solche Flächen sind häufig aber auch wenigstens 100 mm², so zum Beispiel wenigstens 10 mm x 10 mm groß.

Die Wärmedämmschicht wird durch Säulen gebildet, die senkrecht oder zumindest im Wesentlichen senkrecht von der Oberfläche des Substrats abstehen. Eine jede Säule besteht aus keramischem Material. Das erfindungsgemäße System umfasst folglich eine keramische Wärmedämmschicht.

Grundsätzlich sind die Säulen beim Substrat, also an der Unterseite der Wärmedämmschicht, voneinander räumlich getrennt. Benachbarte Säulen der Wärmedämmschicht berühren sich dann an der Unterseite der Wärmedämmschicht nicht. Dann kann die Unterseite der Wärmedämmschicht der Dehnung des Substrats verbessert folgen. Durch Dehnung des Substrats aufgezwungene Spannungen werden vermieden. In den nicht verbundenen und im grenzflächennah stark begrenzten Säulenvolumen kommt es nicht zum Aufbau einer zur Rissbildung notwendigen kritischen Spannungsenergie. Auch können sich die Säulen durch ein Erhitzen der Wärmedämmschicht beim Substrat ausdehnen, ohne dass dadurch eine sich ausdehnende Säule die angrenzenden Säulen beim Substrat beschädigt, was allerdings von untergeordneter Bedeutung ist. Bei der besonders kritischen Unterseite ist die erfindungsgemäße Wärmedämmschicht besonders dehnungstolerant. Ein langlebiger Zusammenhalt zwischen der Substratoberfläche und der Wärmedämmschicht kann so sichergestellt werden.

Es ist allerdings nicht zwingend erforderlich, dass die Säulen sich überhaupt nicht berühren, da es durch das erfindungsgemäße Verfahren auch möglich ist, die Säulen gemäß einem Muster gleichmäßig so anzuordnen, dass die Säulen sich weit überwiegend zumindest bei der Substratoberfläche kaum berühren. Auch berühren sich die Säulen im Fall eines Musters immer in etwa in gleicher Weise, also ebenfalls gemäß einem Muster. Grundsätzlich gibt es maximal sechs verschiedene Kontaktstellen zwischen einer Säule und ihren benachbarten Säulen. Sind die Säulen nämlich im Schnitt in etwa kreisrund, dann kann es sein, dass eine Säule insgesamt bis zu sechs Kontaktstellen zu benachbarten Säulen aufweist. Mehr als sechs Kontaktstellen sind dann jedoch nicht möglich, wenn die Durchmesser der Säulen in etwa immer gleich groß sind. Eine jede Kontaktstelle ist entlang des Umfangs gesehen um ein Vielfaches kleiner als der Umfang der jeweiligen Säule. Selbst wenn sämtliche Kontaktstellen entlang des Umfangs gesehen aufaddiert werden, dann ist das Ergebnis der Summe grundsätzlich kleiner als der halbe Umfang der jeweiligen Säule.

Die Säulen können einen in etwa kreisrunden Durchschnitt aufweisen. Dies hat zur Folge, dass die Mantelfläche einer Säule die Mantelfläche von benachbarten Säulen beim Grund kaum berührt. Dies genügt, um langlebige Wärmedämmschichten zu erhalten.

Insbesondere kann die Wärmedämmschicht vor Temperaturen von mehr als 1000 °C, bevorzugt von mehr als 1500 °C, besonders bevorzugt vor Temperaturen von 1800 °C und mehr schützen. Wird die Schmelztemperatur des keramischen Materials überschritten, so kann die Wärmedämmschicht spätestens dann nicht mehr vor Hitze schützen. Eine Wärmedämmschicht im Sinne der vorliegenden Erfindung kann daher grundsätzlich nicht vor Temperaturen schützen, die zwischen 2400 °C und 3000 °C liegen. Bei geeigneter Wahl des keramischen Materials kann die Wärmedämmschicht aber auch vor Temperaturen von mehr als 2400°C schützen.

Das keramische Material der Wärmedämmschicht kann beim Substrat und folglich bei der Unterseite der Wärmedämmschicht dicht sein, also nicht porös. Dies schließt nicht aus, dass aufgrund von Fertigungsfehlern vereinzelt kleine Poren vorhanden sein können.

Es können oberhalb des Substrats gezielt Hohlräume eingebaut sein, um so Wärme dämmende Eigenschaften zu verbessern. Eine jede Säule kann also beim Substrat dicht sein und trotzdem oberhalb des Substrats in einer ausgewählten Entfernung ein oder mehrere Hohlräume aufweisen. Gibt es mehrere Hohlräume pro Säule, so sind diese grundsätzlich übereinander angeordnet, also nicht nebeneinander. Es handelt sich um einzelne Hohlräume, die gezielt hergestellt in einem ansonsten dichten keramischen Material hergestellt worden sind. Im Unterschied zu einem porösen Material gibt es grundsätzlich keine gleichmäßige Verteilung von Hohlräumen, da diese örtlich gezielt hergestellt worden sind. Auch sind Hohlräume grundsätzlich übereinander und nicht nebeneinander angeordnet. Eine versetzte Anordnung von Löchern innerhalb von einer Säule ist aber regelmäßig möglich.

Der Durchmesser der Säulen kann größer als 100 µm, vorzugsweise größer als 300 µm, sein. Der Durchmesser einer Säule kann wenigstens 200 µm, vorzugsweise wenigstens 400 µm, betragen. Der Durchmesser der Säulen kann kleiner als 900 µm, vorzugsweise kleiner als 700 µm, sein. Der Durchmesser einer Säule kann beispielsweise zweckmäßig bis zu 800 µm, also 0,8 mm, oder bis 1000 µm, also bis zu 1 mm, betragen. Möglich sind aber auch größeren Durchmesser.

Die Säulen der Wärmedämmschicht können mehrere 100 µm hoch, aber auch mehrere Millimeter hoch sein. Eine Säule kann also beispielsweise wenigstens 400 µm, wenigstens 2 mm oder wenigstens 4 mm hoch sein. Die Säulen können beispielsweise bis zu 8 mm oder bis zu 10 mm hoch sein. Grundsätzlich sind aber auch größere Höhen möglich.

Im Vergleich zur Höhe einer Säule kann eine Säule sehr dünn sein. Die Höhe einer jeden Säule kann beispielsweise den Durchmesser einer jeden Säule um einen Faktor 8 oder 10 übersteigen. Hierdurch wird erreicht, dass sich Luftpolster mit entsprechend großer Höhe zwischen den Säulen geeignet ausbilden können, die zur thermischen Isolierung beitragen.

Dies gilt zumindest für Anwendungsfälle, bei denen die Wärmedämmschicht keinen zu hohen äußeren Luftströmungen ausgesetzt ist. Ist eine einzelne Säule vergleichsweise dünn und beträgt der Durchmesser beispielsweise nicht mehr als 0,8 mm oder nicht mehr als 0,6 mm, so kann es vorteilhaft entsprechend viele Luftpolster pro Flächeneinheit geben. Eine gute Wärmeisolierung bzw. Wärmedämmung ist dadurch möglich.

Der Abstand zwischen zwei Säulen ist vorzugsweise beim Substrat und damit bei der Unterseite der Wärmedämmschicht wenigsten 2 µm groß, vorzugsweise wenigstens 5 µm groß, um eine besonders haltbare Wärmedämmschicht bereitzustellen. Der Abstand zwischen zwei Säulen ist vorzugsweise beim Substrat und damit bei der Unterseite der Wärmedämmschicht kleiner als 100 µm, vorzugsweise kleiner 50 µm, um eine Wärmedämmschicht mit guter Wärmedämmung bereitzustellen.

Der Durchmesser einer Säule ist vorzugsweise im Wesentlichen immer gleich. Entlang der Höhe einer Säule verändert sich der Durchmesser also dann kaum. Davon ausgenommen können Bereiche sein, die gezielt verbreitert worden sind, um so beispielsweise eine vollständig oder zumindest teilweise geschlossene Fläche bereitzustellen, die vor Verschmutzung schützen kann.

Der Durchmesser einer Säule kann von Säule zu Säule variieren. Es kann also eine erste Säule mit einem ersten Durchmesser und benachbart eine zweite Säule mit einem zweiten Durchmesser hergestellt worden sein.

Die Säulen können oberhalb des Substrats so verbreitert sein, dass diese oberhalb des Substrats untereinander bzw. miteinander verbunden sind. Die Säulen können auf gleicher oder zumindest auf ähnlicher Höhe miteinander verbunden sein. Die Säulen können oberhalb des Substrats schichtförmig miteinander verbunden sein. Es können zwischen den Säulen oberhalb des Substrats Bereiche vorhanden sein, die darunterliegende Bereiche nach außen hin vollständig abschirmen. Eine Abschirmung kann dazu dienen, einen Luftaustausch zu vermeiden, um gut vor Hitze zu schützen. Eine solche Abschirmung muss nicht vollständig geschlossen sein. Die Abschirmung kann derart geschlossen sein, dass ein innerer Bereich der Wärmedämmschicht vor Verschmutzung zuverlässig geschützt wird.

Die Wärmedämmschicht kann durch erste und zweite Säulen gebildet sein. Die zweiten Säulen können auf den ersten Säulen aufgebracht sein. Die zweiten Säulen können gegenüber den ersten Säulen versetzt angeordnet sein. Die ersten Säulen befinden sich dann in einer ersten Ebene und die zweiten Säulen befinden sich in einer zweiten Ebene, die sich oberhalb der ersten Ebene befindet. Durch die versetzte Anordnung wird erreicht, dass sich verbessert Luftpolster ausbilden, um gut vor Hitze schützen zu können.

Ebenfalls sehr gute Eigenschaften weisen zweischichtige Wärmedämmschichten mit zwei unterschiedlichen keramischen Materialien auf. Das Material der ersten Ebene unterscheidet sich dann von dem Material der zweiten Ebene.

Es ist auch möglich, innerhalb von einer Ebene Säulen aus unterschiedlichen Materialien herzustellen. Eine erste Säule einer ersten Ebene besteht dann aus einem ersten Material und eine zweite Säule einer ersten Ebene besteht dann aus einem anderen zweiten Material. Dies gilt in gleicher Weise für eine optional vorgesehene zweite Ebene, die sich oberhalb der ersten Ebene befinden kann.

Durch Auswahl verschiedener Materialien kann eine Wärmedämmschicht für spezielle Anwendungsfälle optimiert werden.

Die Oberseite des Substrats kann durch eine Haftvermittlerschicht gebildet sein. Mit Oberseite ist im Fall eines Bauteils die Außenseite gemeint, also eine äußere Oberfläche. Die Haftvermittlerschicht kann aus einer Keramik oder aus einem Metall bestehen. Die Haftvermittlerschicht kann aus hoch legierten Nickel- oder Kobalt-basierenden Metallen sowie oxiddispersionsverstärkten Metallen gebildet sein. Beispielsweise kann die Haftvermittlerschicht aus MCrAlY bestehen. Für Anwendungen im Environmental Barrier Coating Bereich ist Aluminiumoxid besonders gut geeignet. Mögliche andere Materialien, aus denen eine Haftvermittlerschicht gebildet sein kann, sind außerdem: Platinaluminide (Ni,Pt)Alₓ (aus Alitierung von Pt auf Ni-Basis), Silizium Si (für SiC-basierte CMCs, Aluminiumoxid (für Al₂O₃-basierte CMCs) Eine Haftvermittlerschicht im Sinne der vorliegenden Erfindung liegt vor, wenn durch die Haftvermittlerschicht ein Oxidations- und/oder Korrosionsschutz erzielt wird. Die Langlebigkeit des Systems beim bestimmungsgemäßen Gebrauch wäre daher wesentlich geringer, wenn es die Haftvermittlerschicht nicht geben würde.

Eine Haftvermittlerschicht kann wenigstens 20 µm oder 100 µm dick sein, um die gewünschte Wirkung zu erzielen. Aus Zweckmäßigkeitsgründen sollte die Dicke der Haftvermittlerschicht 300 µm oder 500 µm nicht übersteigen.

Die Haftvermittlerschicht kann auf einem aus einem Metall bestehenden Bauteil aufgebracht sein. Das Bauteil besteht dann also im Wesentlichen aus einem Metall. Es kann sich um eine Metalllegierung handeln. Auf dem Bauteil befinden sich dann noch ein oder mehrere Schichten, wobei eine der Schichten eine erfindungsgemäße Wärmedämmschicht ist. Typischerweise werden als Metalllegierung hoch legierte Poly- oder Einkristall- Nickel-Basislegierungen eingesetzt (wie z.B. Inconel 738, CMSX-4, Inconel 718). Es können aber auch oxiddispersionsverstärkte Legierungen eingesetzt werden. Auch Chrom- und Eisen-basierte Stähle sowie oxiddispersionsverstärkte Varianten zählen zu möglichen Bauteilmaterialien wie zum Beispiel (CroFer, FeCrAlY, ITM).

Auf der Oberseite der Haftvermittlerschicht kann eine keramische Schicht vorhanden sein, um den Zusammenhalt weiter zu verbessern. Die keramische Schicht kann aus der gleichen Keramik bestehen wie die Säulen. Die keramische Schicht ist grundsätzlich dünn im Vergleich zu anderen Schichten des Systems, um möglichst widerstandsfähig gegenüber thermischen Spannungen zu sein. Die keramische Schicht ist grundsätzlich dünner als die Haftvermittlerschicht. Die keramische Schicht ist zweckmäßig wenigstens 10 µm, vorzugsweise wenigstens 50 µm, dick. Die keramische Schicht ist zweckmäßig nicht dicker als 200 µm, vorzugsweise nicht dicker als 150 µm. Die keramische Schicht kann porös sein. Die keramische Schicht kann dicht sein, also nicht porös. Ein Schmelzen der keramischen Schicht ist möglich. Damit ist ein porenfreies Gefüge der keramischen Schicht bis in die Säule hinein möglich. Eine solche keramische Schicht im Sinne der vorliegenden Erfindung ist gezielt und kontrolliert hergestellt worden, also durch einen separaten Beschichtungsschritt.

Auf der Oberseite der Wärmedämmschicht kann eine Deckschicht vorhanden sein, die die Wärmedämmschicht beispielsweise vor Verschmutzung schützt. Die Deckschicht kann aus einem keramischen Material bestehen. Das keramische Material der Deckschicht kann sich von dem keramischen Material der Wärmedämmschicht unterscheiden. Das keramische Material der Deckschicht kann mit dem keramischen Material der Wärmedämmschicht identisch sein.

Das Bauteil und damit auch das System können beispielsweise Teil einer Turbine sein. Die Turbine kann beispielsweise eine Flugzeugturbine oder eine stationäre Gasturbine sein. Die stationäre Gasturbine kann beispielsweise zur Stromerzeugung dienen.

Das Bauteil und damit auch das System können Teil in einer metallgestützten Brennstoffzelle sein. Das System kann in einer Brennstoffzelle die Verbindung zwischen Elektrolyt bzw. der reaktiven Zone und zum Beispiel gelöcherten oder einfach herzustellenden flachen Metall (Trägermetall daher metallgestützt) herstellen und dabei gleichzeitig die gleichmäßige Gasverteilung sowie Dehnungstoleranz durch die Säulenabstände im unteren Bereich der Säulenschicht gewährleisten.

Das System kann bei anodengestützten Brennstoffzellen eingesetzt werden, um einen porenfreien stabilen Keramikträger zu verwenden und mit der aufliegenden Wärmedämmschicht eine Gasverteilung zu gewährleisten, bevor die sensible aktive Elektrolytschicht der Brennstoffzelle folgt. Durch reihenweise variable Säulenabstände könnten sogar ungewollte horizontale Wärmegradienten im Betrieb minimiert werden.

Auch Bauteilträger für Wärmebehandlungen in Öfen oder wärmebelastete Teile in Verbrennungsmotoren können das System umfassen.

Die Wärmedämmschicht kann beispielsweise aus Y₂O₃ voll- oder teilstablilisiertem ZrO₂ (YSZ) bestehen.

Typische keramische Materialien für Wärmedämmschichten (und sog. Environmental Barrier Coatings) umfassen die Gruppe Zirkonoxid, teilstabilsiertes Zirkonoxid, vollstabilisiertes Zirkonoxid, Hafniumoxid, Ceriumoxid oder Aluminiumoxid. Die Teilstabilisierung des Zirkonoxids erfolgt dabei bevorzugt durch Yttriumoxid, Neodymoxid und/oder Ytterbiumoxid (in neueren Entwicklungen auch die Reihe der Seltenen Erden oder Ta, Ti, ...). Darüber hinaus sind wichtige Materialklassen die Gruppen der Pyrochlore, Perowskite, Hexaaluminate, Granate oder Spinelle.

Die Gruppe der Pyrochlore umfasst beispielsweise La₂Zr₂O₇, La₂Hf₂O₇, Gd₂Zr₂O₇ sowie Mischreihen mit bevorzugt Seltenerd-Elementen.

Die Gruppe der Perowskite umfasst dabei beispielsweise Zirkonate wie SrZrO₃ oder BaZrO₃, Aluminate wie YAlO₃ und auch komplexe Perowskite wie (Ca,Sr)ZrO₃, (Gd,La)AlO₃ oder Ba(Mg_{1/3}Ta_{2/3})O₃ und La(Al_{0.25}Mg_{0.5}Ta_{0.25})O₃.

Die Gruppe der Spinelle z.B. MgAl₂O₄, MgCr₂O₄.

Beispiele der (Hexa-)Aluminate sind LaAl₁₁O₁₈ mit diversen ko-Dotierungen (z.B.. LaLiAl₁₁O_{18.5})

Beispiele der Granate ist das Y₃Al₅O₁₂ (YAG), wobei wiederum Mischreihen mit bevorzugt Seltenerd-Elementen Verwendung finden.

Wegen der im Vergleich zum YSZ geringen Bruchzähigkeit der neuen Wärmedämmschicht-Materialien werden sie in der Regel in einem Doppellagen-Design mit Zwischenlage aus YSZ verwendet.

Im Bereich der CMC-Substrate oder für niedrigere Anwendungstemperaturen sind auch z.B. Seltenerd-Silikate oder die Al₂O₃-SiO₂-Mischreihe inklusive Mullit häufig zu finden.

Die Erfindung betrifft außerdem ein Verfahren zur Herstellung eines erfindungsgemäßen Systems. Eine keramische Säule der Wärmedämmschicht wird erfindungsgemäß aus einem Pulver hergestellt, das durch einen Laser verschweißt wird. Das Pulver wird durch ein oder mehrere Pulverzuführeinrichtungen an die Stelle gebracht, bei der eine keramische Säule entstehen soll. Das Licht eines Lasers wird auf die Stelle gerichtet, bei der das Pulver so verschweißt werden soll, dass eine Säule gebildet wird. Pulverkörner werden so verschweißt, dass eine Säule entsteht. Pulver wird vorzugsweise kontinuierlich und gleichmäßig der Stelle zugeführt, bei der eine Säule entstehen soll. Durch geeignetes Bewegen des Lasers und/oder einer Optik für den Laser kann eine gewünschte Form eines aus den Pulverkörnern zusammengeschweißten Körpers hergestellt werden. Pulverkörner können durch das Licht des Lasers so geschmolzen werden, dass ein dichter Körper entsteht, der also nicht porös ist.

Durch dieses Verfahren können die Größe und Form einer Säule sehr kontrolliert hergestellt werden. Es ist dadurch möglich, Säulen so herzustellen, dass diese sich an der Unterseite der Wärmedämmschicht und damit beim Substrat nicht gegenseitig berühren. Es ist auch möglich, Säulen gezielt oberhalb des Substrats so zu verbreitern, dass diese sich beispielsweise berühren. Es ist außerdem möglich, gezielt ein oder mehrere Hohlräume in einer jeden Säule einzubauen, um so wärmedämmende Eigenschaften zu verbessern. Es ist möglich, erste Säulen in einer ersten Ebene herzustellen und im Anschluss daran zweite Säulen in einer zweiten Ebene oberhalb der ersten Ebene, wobei die zweiten Säulen versetzt gegenüber den ersten Säulen angeordnet sind. Es ist möglich, Säulen mit gleichen oder unterschiedlichen Durchmessern gezielt herzustellen. Auch abweichende Formen können hergestellt werden. So kann sich eine Säule zur Außenseite der Wärmedämmschicht hin beispielsweise kontinuierlich verbreitern. Eine Säule kann sich aber auch nach außen hin verjüngen oder bauchförmig sein. Kombinationen sind möglich. Es ist also möglich, eine erste Säule nach oben hin, d. h. zur Außenseite hin, zu verjüngen und eine benachbarte Säule nach oben hin zu verbreitern.

Die verschiedenen gewünschten Formen einer Säule können durch entsprechende Bewegungen des Lasers und/oder einer zugehörigen Optik gesteuert hergestellt werden. Wird beispielsweise ein Laser und/oder eine zugehörige Optik kontinuierlich und gleichmäßig entsprechend der Wachstumsrate vom Ort des Verschweißens linear wegbewegt, so entsteht ein Körper mit gleichmäßigem Durchmesser. Durch Bremsen oder Anhalten einer Bewegung des Lasers und/oder einer zugehörigen Optik kann der Durchmesser einer Säule auf einer gewünschten Höhe verbreitert werden. Im Anschluss daran können der Laser und/oder eine zugehörige Optik wieder mit der vorangegangen Geschwindigkeit weiter wegbewegt werden, um so das Wachstum der Säule fortzusetzen.

Zur Herstellung einer Säule wird der Laser und/oder eine zugehörige Optik vorzugsweise während des Schweißens von der Substratoberfläche senkrecht oder zumindest im Wesentlichen senkrecht wegbewegt. Es können dadurch Säulen hergestellt werden, die senkrecht von der Substratoberfläche abstehen.

Die Säulen können aber auch schräg sein. Solche schrägen Säulen kann man bei gleicher senkrechter Ausrichtung der Laseroptik herstellen. Dabei trägt man eine zur ersten Säule versetzte zweite Säule auf und versetzt die nächste erneut. Bei kontinuierlicher schräger Bewegung der Beschichtungseinheit können auch schräge Säulen entstehen.

Die Geschwindigkeit des Lasers und/oder der zugehörigen Optik, mit der der Laser und/oder die zugehörige Optik von der Oberfläche des Substrats wegbewegt werden, entspricht vorzugsweise der Wachstumsgeschwindigkeit der Säule. Es entsteht so eine Säule, die einen gleichmäßigen Durchmesser aufweist. Die Höhe einer so hergestellten Säule wird nur durch die Eigenstabilität der Säule begrenzt.

Soll gezielt ein Hohlraum in eine Säule eingebaut werden, so wird das Wegbewegen des Lasers und/oder der zugehörigen Optik von der Substratoberfläche zunächst gebremst, ohne die Zufuhr von Pulver zu verändern. Nach dem Bremsen wird der Laser schließlich ausgeschaltet. Es hat sich gezeigt, dass durch diese Verfahrensschritte gezielt ein einzelner Hohlraum in eine Säule eingebaut werden kann. Im Anschluss daran kann die Fertigung der Säule oberhalb des Hohlraums zunächst fortgesetzt werden. Es kann dann auf gleiche Weise ein nächster Hohlraum oberhalb des erstgenannten Hohlraums hergestellt werden, indem die Bewegung des Lasers und/oder der zugehörigen Optik erneut zuerst abgebremst werden, um danach den Laser auszuschalten.

Eine zugehörige Optik liegt vor, wenn das Licht des Lasers zunächst die Optik passiert, bevor der Laser Pulver verschweißt. Durch die Optik wird das Licht des Lasers insbesondere fokussiert. Es ist durch die Fokussierung möglich, optimiert Hitze dem Pulver zuführen zu können, um dadurch das Pulver zu schmelzen.

Vorzugsweise verläuft das Licht des Lasers während der Fertigung senkrecht zur Oberfläche des Substrats, um die Säulen herzustellen. Pulver kann dann seitlich zum Beispiel mithilfe eines Luftstroms der gewünschten Stelle zugeführt werden, also dem Ort auf der Substratoberfläche, bei dem eine Säule hergestellt werden soll.

Die Leistung des Lasers wird so ausgewählt, dass das zugeführte Pulver geschmolzen werden kann. Wird das Licht des Lasers durch eine zugehörige Optik fokussiert, so befindet sich der Fokus des Lasers vorzugsweise innerhalb des Stroms des Pulvers, um mit maximaler Energie dem Pulver Hitze zuzuführen. Der Fokus des Lasers befindet sich vorteilhaft oberhalb der Oberfläche, bei der die Säule entsteht. Es wird dadurch das Pulver besonders geeignet geschmolzen.

Durch die Erfindung können die Säulen sehr regelmäßig angeordnet werden. Es kann also eine erste Reihe an Säulen gefertigt werden, wobei die Säulen untereinander im Wesentlichen gleiche Abstände aufweisen. Eine zweite Reihe von solchen Säulen kann daneben angeordnet werden. Die zweite Reihe kann versetzt gegenüber der ersten Reihe angeordnet sein, um eine möglichst hohe Packungsdichte zu erzielen und gleichzeitig für besonders gleichmäßige Abstände zwischen den einzelnen Säulen zu sorgen.

Der Durchmesser von Säulen einer zweiten Reihe kann anders sein als der Durchmesser von Säulen einer ersten Reihe, um Luftpolster zwischen Säulen zu vergrößern und umso vorteilhafte Wärmedämmeigenschaften zu erzielen.

Bei unterschiedlichen Durchmessern kann auch eine dichtere Packung erzeugt werden (Kieselstein-Prinzip). Je nach Ausführung/Einsatzbedingungen ist auch das vorteilhaft.

Nachfolgend wird die Erfindung anhand von Figuren näher verdeutlicht. Es zeigen
- Figur 1:: schematische Darstellung des Verfahrens;
- Figur 2:: Aufsicht auf eine Probe mit Wärmedämmschicht;
- Figur 3:: Aufsicht auf die Probe aus Figur 2 nach Thermozyklierversuchen;
- Figur 4:: Aufnahme eines Querschliffs der Probe der Figur 3;
- Figur 5:: Aufnahme eines Querschliffs durch eine weitere Probe;
- Figur 6:: Aufnahme eines Querschliffs durch eine nicht erfindungsgemäße Probe, hergestellt durch EB-PVD (electron beam physical vapor deposition);
- Figur 7:: Aufnahme eines Querschliffs durch eine nicht erfindungsgemäße Probe, hergestellt durch PS-PVD (plasma spray-physical vapor deposition);
- Figur 8:: Aufnahme eines Querschliffs durch eine nicht erfindungsgemäße Probe, hergestellt durch SPS (suspension plasma spraying);
- Figur 9:: schematische Darstellung eines Systems mit ersten und zweiten Säulen in unterschiedlichen Ebenen;
- Figur 10:: schematische Darstellung eines Systems mit einer Deckschicht oberhalb von Säulen;
- Figur 11:: schematische Darstellung eines Systems mit Verbreiterungen der Säulen in einem mittleren Bereich;
- Figur 12:: schematische Darstellung eines Systems mit Verbreiterungen der Säulen zur Außenseite der Wärmedämmschicht;
- Figur 13:: schematische Aufsicht auf Säulen eines Systems;
- Figur 14:: schematische Aufsicht auf Säulen eines Systems mit variierenden Durchmessern;
- Figur 15:: schematische Aufsicht auf Säulen eines Systems mit sich kaum berührenden Säulen
- Figur 16:: Aufnahme einer homogen hergestellten Säule.

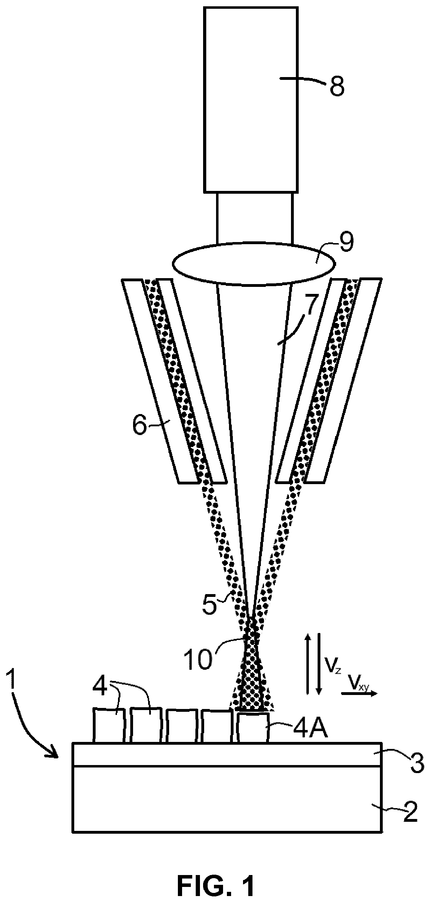

Die Figur 1 zeigt im Schnitt ein Substrat 1. Das Substrat 1 umfasst einen metallischen Grundkörper 2 und auf der Oberseite des Grundkörpers 2 eine Haftvermittlerschicht 3. Auf der Haftvermittlerschicht 3 werden Säulen 4 hergestellt. In der Figur 1 werden bereits vier fertig gestellte Säulen 4 dargestellt. Es wird die Fertigung einer fünften Säule 4A gezeigt. Für die Herstellung der fünften Säule 4A wird keramisches Pulver 5 über Düsen 6 mithilfe von Luft der Stelle zugeführt, an dem eine fünfte Säule 4A entsteht. Die Strömungsrichtung des Pulvers 5 schließt mit der V_{z} - Richtung einen spitzen Winkel ein, wie dies durch die Figur 1 verdeutlicht wird. Die V_{z} - Richtung ist die Richtung senkrecht zur Oberfläche des Substrats 1. Der Strom des Pulvers 5 wird auf die Stelle fokussiert, an der die fünfte Säule 4A gefertigt wird. Während der Herstellung strömt das Pulver 5 gleichmäßig und kontinuierlich zu dieser Stelle. Es können zwei einzelne Ströme des Pulvers 5 zu dem Ort bzw. der Stelle geleitet werden, an der die fünfte Säule 4A entsteht. Es können mehr als zwei einzelne Ströme des Pulvers 5 zu dem Ort bzw. der Stelle geleitet werden, an der die fünfte Säule 4A entsteht, also zum Beispiel drei oder vier Ströme. Der Strom des Pulvers 5 kann einen Trichter bilden, dessen Grund sich dann bei der Stelle befindet, an dem die fünfte Säule 4A gefertigt wird. Es kann aber auch nur ein Strom an Pulver 5 genügen, um eine fünfte Säule 4A zu fertigen, was aber weniger zweckmäßig ist.

Das Licht 7 eines Lasers 8 verläuft entlang der V_{z} - Richtung. Das Licht 7 des Lasers 8 verläuft also orthogonal bzw. senkrecht zur Oberfläche des Substrats 1. Das Licht 7 des Lasers 8 wird auf die Stelle gerichtet, an der die Säule 4A entsteht. Der Durchmesser des Lichts 7 ist wesentlich geringer als der Durchmesser der zu fertigenden Säule 4A. Bei dem Wachstumspunkt betrug der Durchmesser des Lichts beispielsweise in einem Fall nur etwa 17 µm im Vergleich zur Säule mit etwa 450 µm. Um den Durchmesser des Lichts 7 geeignet einstellen zu können, ist eine das Licht 7 fokussierende Optik vorhanden, so zum Beispiel eine konvexe optische Linse 9. Das Licht 7 wird dann durch die Optik 9 hindurchgeleitet und dadurch fokussiert. Es gelingt so, einen geeignet leistungsfähigen Lichtkegel so bereitzustellen, dass das Pulver 5 an geeigneter Stelle bei und auf der Oberfläche der herzustellenden Säule 4A geschmolzen werden kann. Der Fokus 10 des Lichts 7 kann vorteilhaft so eingestellt sein, dass dieser sich oberhalb der Oberfläche der herzustellenden Säule 4A befindet, wie dies in der Figur 1 gezeigt wird. Die Position des Fokus 10 des Lichts 7 ist vorteilhaft so, dass der Fokus 10 sich innerhalb von strömendem Pulver befindet, wie dies in der Figur 1 gezeigt wird. Dem Pulver 5 wird so in maximal möglicher Weise Hitze zugeführt, kurz bevor das Pulver 5 auf die Oberfläche der herzustellenden Säule 4A auftrifft. Das Pulver wird nach dem Auftreffen zunächst weiter erhitzt und dadurch schließlich geeignet geschmolzen.

Während der Herstellung wird die Optik 9 von der Oberfläche des Substrats 1 in V_{z} - Richtung nach oben wegbewegt. Der Laser 8 kann aber auch zusammen mit der fokussierenden Optik 9 von der Oberfläche des Substrats 1 in V_{z} - Richtung nach oben wegbewegt werden. Die Bewegungsgeschwindigkeit entspricht der Wachstumsgeschwindigkeit der Säule 4A. Dadurch kann das zuvor geschmolzene Pulver 5 wieder erstarren, um so die Säule 4A herzustellen. Alternativ könnte das Substrat bewegt werden.

Bewegungen umfassen grundsätzlich Beschleunigungs- und Abbremsvorgänge. Ein Beschleunigungsvorgang lässt zum Beispiel eine Vorbehandlung (Schmelzen des Substrats) zu.

In einem Fall wurde eine fast exakt 6 mm hohe Säule bei einer programmierten 6 mm Bewegung erhalten. Die Wachstumsgeschwindigkeit betrug also im Mittel der Bewegungsgeschwindigkeit der Optik.

Ist die Säule 4A fertiggestellt worden, so wird der Laser 8 ausgeschaltet. Der Laser 8 wird zusammen mit der Optik 9 und den Düsen 6 in V_{XY} - Richtung, also parallel zur Substratoberfläche, verfahren, bis die Position erreicht ist, an der eine nächste Säule an gewünschter Stelle gefertigt werden kann. Die zugehörige Optik 9 oder der Laser 8 mit der Optik 9 werden in V_{z} - Richtung wieder in Richtung Substrat 1 bewegt, bis eine neue Startposition erreicht ist, von der aus eine Herstellung einer nächsten Säule begonnen werden kann.

Der Laser kann bereits im Annäherungsvorgang mit abweichenden Laserparametern eingeschaltet werden, um eine Vorbehandlung des Substrats auf der Grundfläche der herzustellenden Säule durchzuführen.

Ein Bewegen der Düsen in V_{z} - Richtung ist nicht erforderlich, um eine Säule geeignet herzustellen. Dies gilt zumindest dann, wenn die Höhe der Säule nicht übermäßig groß werden soll. Grundsätzlich ist es aber auch möglich, die Düsen 8 zusammen mit der Optik 9 und/oder dem Laser 8 auch in V_{z} - Richtung zu bewegen.

Es kann zweckmäßig sein, mithilfe des Pulvers zunächst eine dünne keramische Schicht aufzutragen, um die Haftung zwischen der Haftvermittlerschicht 3 und dem keramischen Material zu verbessern. Die dünne keramische Schicht kann porös sein.

Durch das beschriebene Verfahren entstehen Säulen 4, die nicht porös sind. Soll ein Hohlraum in eine Säule 4 eingebaut werden, so wird zunächst das Bewegen der Optik 9 und gegebenenfalls des Lasers 10 gebremst. Dann wird der Laser 10 ausgeschaltet.

Um eine Oxidation des Materials zu vermeiden, wird das Verfahren zweckmäßig im Vakuum oder unter einer Schutzgasatmosphäre durchgeführt.

Es wurden gemäß dem zuvor beschriebenen Verfahren Säulen hergestellt. Eine Beschichtungseinheit umfasste die Düsen 6, den Laser 8 und die Optik 9. Als Laser wurde ein Laser Nd-YAG mit einer Lichtwellenlänge von 1064nm eingesetzt und zwar der Laser TruFiber400 der Firma TRUMPF GmbH + Co. KG aus Ditzingen, Deutschland. Der Laser wurde in einer TruCell3008 Lasereinheit der Firma TRUMPF GmbH + Co. KG eingesetzt. Die Divergenz des Laserlichts betrug 5°. Der Durchmesser des Laserfokus betrug 17µm. Der Fokus des Lasers befand sich im Fokus des zugeführten Pulvers. Der Durchmesser des Fokus des Pulvers betrug ca. 200 µm. Der Laser wurde sowohl kontinuierlich mit einer Leistung von 15W als auch gepulst mit einer Leistung von 40W mit einer Pulsfrequenz von 1000Hz und einer Pulslänge von 0,1 ms betrieben. Der Laser wurde sowohl kontinuierlich mit einer Leistung von 15W (zur Säulenherstellung) als auch zur "Vorbehandlung" mit abweichenden Parametern betrieben. Die "Vorbehandlung" wurde im Fall der direkten Säulenbeschichtung einer Haftvermittlerschicht genutzt. Dafür wurde der Laser 3 mm senkrecht über dem Startpunkt der Beschichtung aktiviert. Anschließend wurde der Laser mit (programmierter) maximaler Geschwindigkeit zum Startpunkt des Säulenwachstums verfahren. Während dieses schnellen Verfahrens wurde der Laser gepulst mit einer Leistung von 40W im Mittel, genauer mit einer Pulsfrequenz von 1000Hz und einer Pulslänge von 0,1ms bei 400W, betrieben. Als Pulver wurde sphärisches Yttrium teilstabilisiertes Zirconiumoxid d50 = 34 µm der Firma Metco 233B, Oerlicon Metco Pfäffikon, Schweiz, eingesetzt. Es wurde ein kontinuierlicher Argonstrom zur Pulverförderung und für die Schutzatmosphäre verwendet. Der Argonfluss betrug 20L/min zur Pulverförderung von etwa 2,5 g/min.

Die Beschichtungseinheit wurde auf einen Startpunkt der Beschichtung verfahren. Anschließend wurde die Substratoberfläche kurz angeschmolzen, um eine gute Haftung zu erzielen. Die Beschichtungseinheit wurde anschließend bei eingeschaltetem Laser senkrecht zur Substratoberfläche um eine bestimmte Höhe verfahren. Dabei wurde das eingesetzte Pulver koaxial zugeführt. Die Verfahrgeschwindigkeit betrug in einem Fall durchschnittlich 300 mm/min in Vz - Richtung nach oben weg vom Substrat 1. Diese Geschwindigkeit entsprach der Wachstumsgeschwindigkeit der hergestellten Säulen. Die Schweißrichtung war also wie zuvor beschrieben senkrecht zum Substrat 1. Das Schweißen erfolgte unter Schutzgas, um eine Oxidation der eingesetzten Materialien zu vermeiden. Gegen Ende der Herstellung einer Säule wurde zunächst die Verfahrgeschwindigkeit abgebremst und anschließend der Laser ausgeschaltet. Es entstanden homogene dichte Säulen mit fast exakt der Höhe des programmierten Verfahrweges in V_{z} - Richtung.

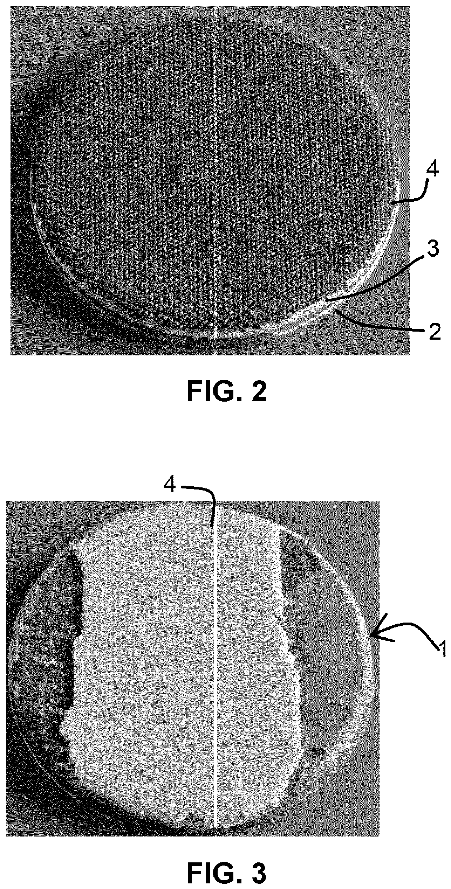

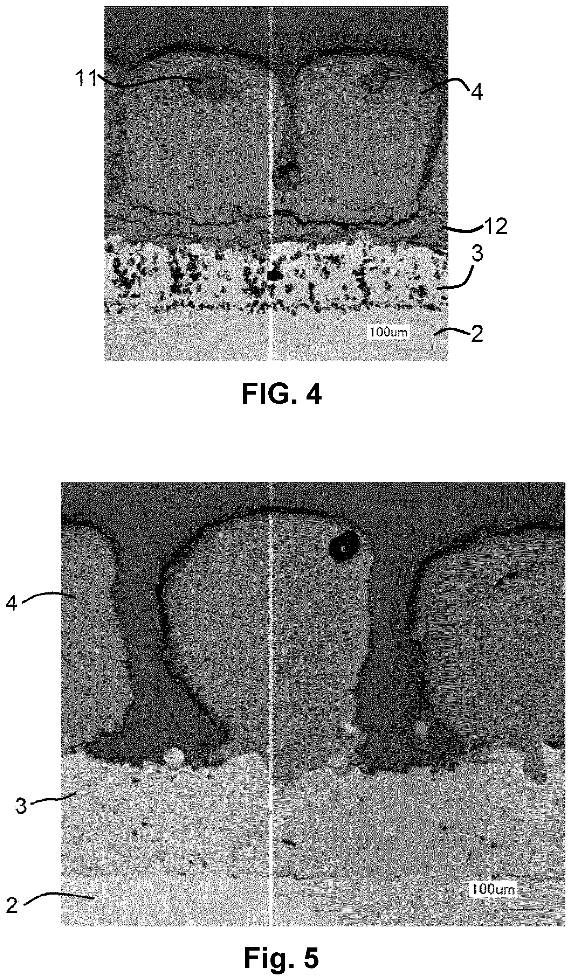

Die Substratoberfläche war eine durch thermisches Spritzen hergestellte poröse YSZ Schicht auf einem Inconel 738 Bauteil mit einer thermisch gespritzten MCrAlY Haftvermittlerschicht, Figuren 2-4, oder eine durch Vakuumplasmaspritzen aufgetragene MCrAlY Haftvermittlerschicht auf Baustahl, Figur 5.

Es wurden so unterschiedlich dimensionierte Wärmedämmschichten auf unterschiedlichen Substraten hergestellt. Es wurde sowohl der Fall untersucht, dass das Substrat eine Haftvermittlerschicht und darauf eine dünne keramische Schicht umfasste, als auch der Fall, dass Säulen unmittelbar auf der Haftvermittlerschicht hergestellt wurden.

Die Figur 2 zeigt eine fotografische Aufnahme von wie zuvor beschrieben hergestellten Säulen 4 von oben, die auf einem Substrat hergestellt worden sind. Die Säulen 4 bilden eine Wärmedämmschicht für das darunter befindliche Substrat. Es wurde ein im Prinzip gleich aufgebautes Vergleichssubstrat hergestellt, bei dem aber die Wärmedämmschicht auf konventionelle Weise durch ein Gasabscheidungsverfahren aufgebracht wurde. Diese Vergleichsprobe hatte eine konventionell hergestellte Wärmedämmschicht mit einer Dicke, welche der Gesamtdicke der Wärmdämmschichten der bestimmungsgemäß hergestellten Probe entsprach.

Zwei so hergestellte, wie in der Figur 2 gezeigte Systeme wurden in Thermozyklierversuchen überprüft. Dabei wurde die keramische Vorderseite, also die Wärmedämmschicht, der jeweiligen Probe mit einem Gasbrenner erwärmt, während die Rückseite mit Druckluft gekühlt wurde. Für die Thermozyklierung wurde der Gasbrenner in regelmäßigen Abständen von der Vorderseite entfernt. Die Temperatur der Vorderseite wurde mit einem Pyrometer gemessen. Die Temperatur der Probenrückseite wurde über ein Thermoelement in der Probe bestimmt. Die zwei überprüften erfindungsgemäßen Wärmedämmschichten versagten nach 2264 bzw. 1725 Zyklen von 5min Heizen und 2min Kühlen bei 1300°C Vorderseitentemperatur bei der ersten Probe sowie 1400°C Vorderseitentemperatur bei der zweiten Probe. Die mittlere Temperatur der Haftvermittlerschicht während der Heizphase betrug dabei 1077°C bzw. 1082°C, während die Rückseite des Substarts jeweils auf 1050°C im Mittel gekühlt wurde. Die Figur 3 zeigt eine solche Probe nach 2264 Zyklen, die einer Temperatur von 1300 °C ausgesetzt wurde. Es ist zu sehen, dass die Wärmedämmschicht 4 teilweise nicht mehr vorhanden ist.

Die Wärmedämmung, zu erkennen an dem Temperaturunterschied zwischen Vorder- und Rückseite, entsprach der Wärmedämmung der nicht erfindungsgemäßen, ähnlich aufgebauten Vergleichsprobe. Es wurde jedoch eine höhere Lebensdauer erzielt, da im Fall der Vergleichsprobe lediglich bis zu 1200 Zyklen möglich waren.

Die Schichtdicken der erfindungsgemäßen Proben wurden nach der Thermozyklierung anhand von Querschliffen bestimmt. Ein solcher Querschliff wird in der Figur 4 gezeigt. Die Figur 4 verdeutlicht das Vorhandensein eines Hohlraums 11 bei jedem außen liegenden Ende der Säulen 4. Die Ausdehnung der Hohlräume lag zwischen ca. 50 µm und 150 µm, wie dies durch die Figur 4 verdeutlicht wird. Die Säulen 4 wiesen eine Höhe und einen Durchmesser von ca. 400 µm bis 450 µm auf, wie die Figur 4 zeigt. Die Figur 4 zeigt auch, dass es zwischen den Säulen 4 einen Abstand gab. Die Untersuchungen der in den Figuren 3 und 4 gezeigten Probe haben ergeben, dass das System an der Grenzfläche von nicht kolumnarer Keramikbeschichtung 12 und Haftvermittlerschicht 3 versagt hat. Der Verbund zwischen der Keramikbeschichtung 12 und den Säulen 4 blieb erhalten.

Die fotografische Aufnahme gemäß Figur 4 mit der hinzugefügten Maßstabsangabe zeigt, dass die Keramikbeschichtung 12 ca. 150 µm und die Haftvermittlerschicht 3 ca. 300 µm dick waren. Der Abstand zwischen zwei Säulen betrug immer wenigstens 10 µm.

Eine direkte Beschichtung einer Haftvermittlerschicht 3 mit Säulen 4 ist ebenfalls möglich. Dies zeigt die Aufnahme eines Querschliffs durch eine weitere hergestellte Probe in der Figur 5. Die Oberfläche des Substrats, also die Oberfläche der Haftvermittlerschicht 3, wurde zunächst mit einem gepulsten Laserstrahl vorbehandelt, um die Oberfläche anzuschmelzen. Es konnte so eine gute Anbindung der Säulen 4 an die Haftvermittlerschicht 3 erzielt werden. Die Haftvermittlerschicht war ca. 300 µm dick. Die Säulen vier waren ca. 600 µm hoch und bis zu 550 µm breit. Das Material der Säulen 4 wies vereinzelt kleine Poren auf. Weit überwiegend hat es sich aber um ein dichtes Material gehandelt. Zwischen den Säulen 4 gab es ausnahmslos deutliche Abstände von wenigstens 50 µm.

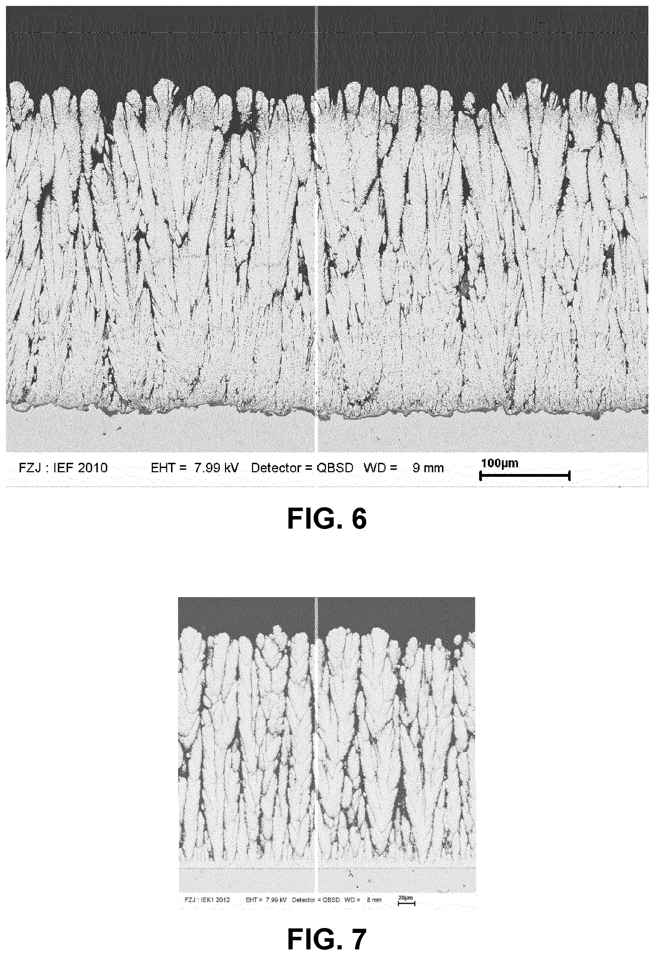

Die Figur 6 zeigt ein nicht erfindungsgemäßes Vergleichsbeispiel einer kolumnaren YSZ Wärmedämmschicht, die durch EB-PVD auf einem Substrat hergestellt wurde. Das Vergleichsbeispiel verdeutlicht, dass es durch EB-PVD nicht möglich ist, Säulen vergleichbar kontrolliert und gleichmäßig herzustellen. Die Formen der Säulen sind sehr unregelmäßig. Die Säulen können sich unregelmäßig oberhalb des Substrats verzweigen. Die Verläufe in nach oben (V_{z}-Richtung) sind sehr unregelmäßig und weisen in unterschiedliche Richtungen. Insbesondere an der Unterseite der Wärmedämmschicht gibt es nur sehr wenige Spalte zwischen zwei benachbarten Säulen. Die Säulen berühren sich daher gerade beim Substrat zumindest überwiegend. Eine regelmäßige Anordnung der Säulen gemäß einem Muster ist nicht vorhanden. Das Material ist rissig und porös. Die Anbindung der federartigen Strukturen im unteren Bereich der Wärmedämmschicht ist weniger stabil als jede der erfindungsgemäß hergestellten Säulen.

Die Figur 7 zeigt ein nicht erfindungsgemäßes Vergleichsbeispiel einer kolumnaren YSZ Wärmedämmschicht, die durch PS-PVD auf einem Substrat hergestellt wurde. Das Ergebnis ähnelt dem in der Figur 6 gezeigtem Ergebnis. Durch PS-PVD ist es ebenfalls nicht möglich, Säulen in einer mit der Erfindung vergleichbaren Weise kontrolliert herzustellen. Insbesondere an der Unterseite der Wärmedämmschicht berühren sich die durch PS-PVD hergestellten Säulen unvermeidlich sehr umfangreich. Eine regelmäßige Anordnung der Säulen gemäß einem Muster ist nicht vorhanden. Das Material ist von Rissen durchzogen. Vergleichbar mit den EB-PVD Schichten ist eine schlechtere Anbindung im unteren Wärmedämmschichtbereich vorhanden.

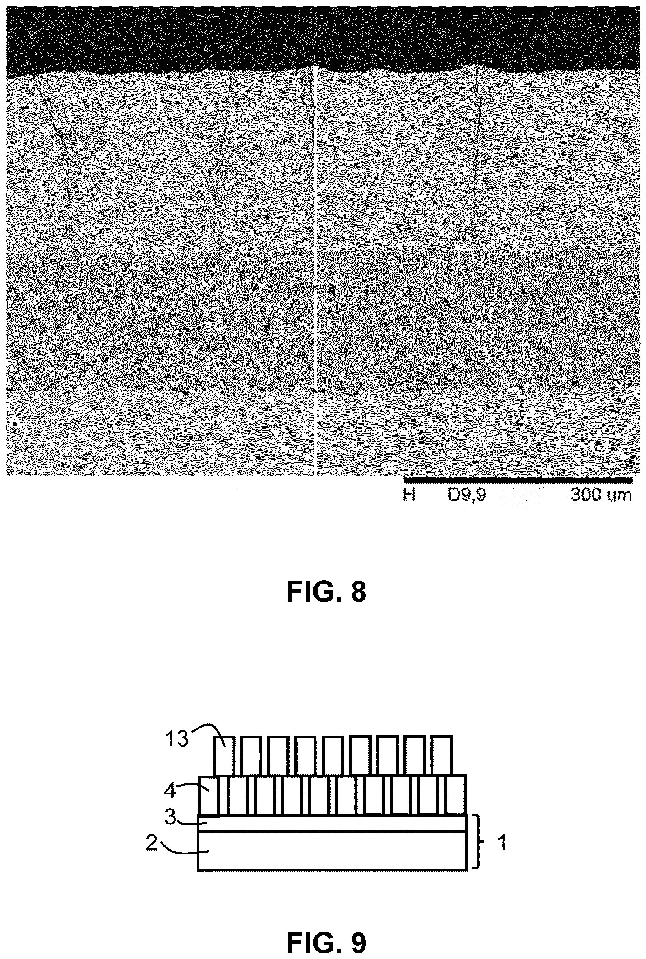

Die Figur 8 zeigt ein nicht erfindungsgemäßes Vergleichsbeispiel einer kolumnaren Wärmedämmschicht, die durch SPS hergestellt wurde. Insbesondere an der Unterseite der Wärmedämmschicht berühren sich die durch PS-PVD hergestellten Säulen vollständig. Auch sind Spalte zwischen Säulen oberhalb des Substrats klein. Die Breite einer Säule kann mehr als doppelt so breit sein wie die Breite einer benachbarten Säule, ohne dass dies gezielt gesteuert werden könnte. Bei den Spalten treten unvermeidlich Rissbildungen auf, die in die Säulen hineinführen können und damit den Zusammenhalt der Säulen einschränken. Damit vergleichbare Risse sind bei den erfindungsgemäßen Säulen nicht vorhanden. Das Material sieht geschlossenporig aus, ist also demnach porös.

Die Figur 9 zeigt schematisch ein System, bei dem die Wärmedämmschicht durch erste und zweite Säulen 4, 13 gebildet ist. Die zweiten Säulen 13 sind auf den ersten Säulen 4 durch Laserschweißen aufgebracht worden. Die zweiten Säulen 13 sind gegenüber den ersten Säulen 4 versetzt angeordnet. Es entstehen so Luftkammern zwischen den ersten Säulen 4, die gegenüber der Außenseite der Wärmedämmschicht zumindest teilweise durch die zweiten Säulen 13 geschlossen sind. Die Wärme dämmenden Eigenschaften lassen sich dadurch verbessern.

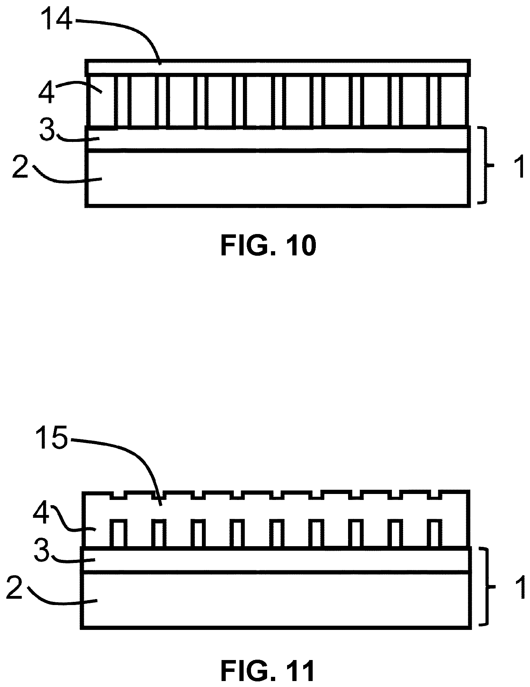

Die Figur 10 zeigt schematisch ein System, bei dem die Säulen 4 auf der Außenseite der Wärmedämmschicht durch eine Deckschicht 14 nach außen hin abgeschirmt sind. Dies verbessert die Wärmedämmung und schützt das Innere der Wärmedämmschicht vor Verunreinigungen. Die Deckschicht 14 kann vollständig geschlossen sein.

Die Figur 11 zeigt schematisch ein System, bei dem die Säulen nahe bei der Außenseite der Wärmedämmschicht verbreitert worden sind. Durch die Verbreiterung 15 entsteht eine Art Schicht, die vor Verschmutzung schützt und die Wärmedämmung verbessert. Die Schicht kann vollständig geschlossen sein. Es kann sich aber auch um eine Schicht handeln, die überwiegend geschlossen ist.

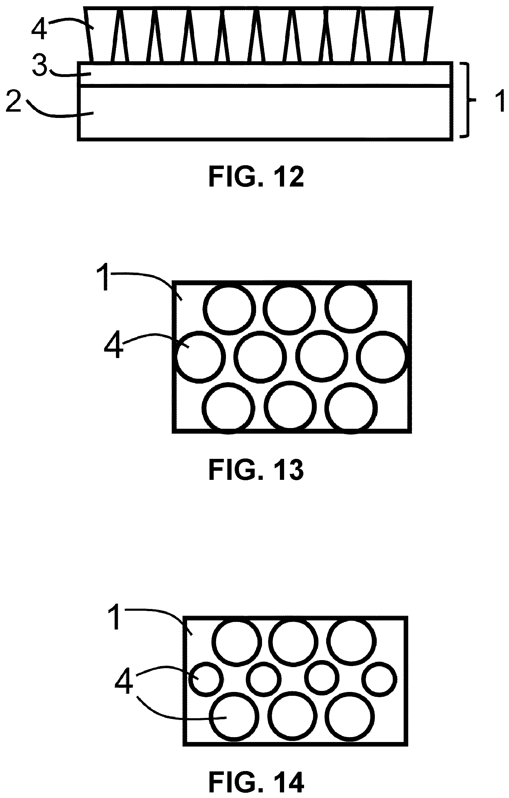

Die Figur 12 zeigt schematisch ein System, bei dem die Säulen Richtung Außenseite der Wärmedämmschicht konusartig verbreitert hergestellt worden sind. Es kann so eine Art geschlossene oder zumindest teilweise geschlossenen Schicht auf der Außenseite der Wärmedämmschicht gebildet werden, die vor Verschmutzung schützt und die Wärmedämmung verbessert.

Die schematische Aufsicht gemäß Figur 13 zeigt, dass die Säulen 4 gleichmäßig gemäß einem Muster angeordnet werden können. Dies ist bei herkömmlichen Fertigungsverfahren so nicht möglich. Es kann also eine erste Reihe an Säulen 4 gefertigt werden, wobei die Säulen untereinander im Wesentlichen gleiche Abstände aufweisen. Eine zweite Reihe von solchen Säulen 4 kann daneben angeordnet werden. Die zweite Reihe kann wie gezeigt versetzt gegenüber der ersten Reihe angeordnet sein, um eine möglichst hohe Packungsdichte zu erzielen und um gleichmäßig vor Hitze schützen zu können. Gemäß dieser Anordnung wurden die Säulen der in den Figuren 2 bis 4 gezeigten Proben hergestellt.

Die schematische Aufsicht gemäß Figur 14 zeigt, dass die Säulen 4 gleichmäßig gemäß einem Muster angeordnet werden können und unterschiedliche Durchmesser haben können, um die Breite von Luftpolstern gezielt einstellen zu können. Es wechseln sich Reihen von Säulen mit kleinen und großen Säulen ab. Mit herkömmlichen Herstellungsverfahren sind solche Muster nicht möglich.

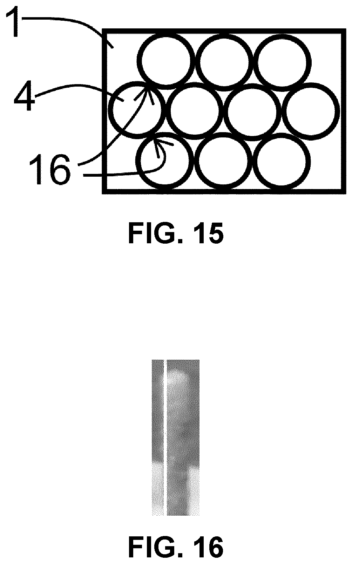

Die Figur 15 ist eine schematische Aufsicht auf ein System und zeigt den Fall, dass die Säulen 4 sich kaum berühren. Die Säulen 4 sind gemäß einem Muster gleichmäßig angeordnet. Weit überwiegend berühren sich Mantelflächen der Säulen 4 beim Substrat 1 nicht. Auch berühren sich die Säulen 4 immer in etwa in gleicher Weise, d. h., ebenfalls in der Art eines Musters. Die idealisiert dargestellten Säulen 4 sind kreisrund und weisen gleiche Durchmesser auf. Eine Säule 4 weist daher insgesamt bis zu sechs Kontaktstellen 16 zu benachbarten Säulen 4 auf. Eine jede Kontaktstelle 16 ist entlang des Umfangs gesehen um ein Vielfaches kleiner als der Umfang der jeweiligen Säule, wie dies durch die Figur 15 verdeutlicht wird. Selbst wenn sämtliche Kontaktstellen 15 entlang des Umfangs gesehen aufaddiert werden, dann ist das Ergebnis der Summe deutlich kleiner als der halbe Umfang der jeweiligen Säule 4.

Die Figur 16 zeigt eine Aufnahme einer sehr homogenen Säule, die schrittweise mithilfe eines gepulsten Lasers hergestellt worden ist. Die Dauer eines Laserpulses liegt vorzugsweise zwischen 0, 1 und 0,5 Sekunden. Die Dauer der Laserpulse betrug im Fall der in der Figur 16 gezeigten Säule 0,2 Sekunden. Die Zeit zwischen zwei Pulsen betrug eine oder zwei Sekunden. Eine Pause zwischen zwei Laserpulsen kann aber auch länger sein und beispielsweise vier oder fünf Sekunden lang sein. Schrittweise wurden der Fokus des Lasers und die Pulverzufuhr in der Position während dieser Pausen zwischen zwei Laserpulsen angepasst. Eine Pause von 1 bis 2 Sekunden zwischen zwei Pulsen reicht aus, um das Pulvermaterial zu wechseln. Durch die Erfindung kann also eine sehr homogene Säule hergestellt werden, die aus verschiedenen Materialien gebildet sein kann.

## Patentansprüche

1. System mit einem Substrat (1) und einer auf dem Substrat (1) aufgebrachten keramischen, aus Säulen (4, 13) gebildeten Wärmedämmschicht, wobei die Säulen (4, 13) beim Substrat (1)
- voneinander räumlich getrennt sind, sich also nicht berühren, oder
- sich zumindest kaum berühren, das heißt, dass die Säulen (4, 13) bis zu sechs Kontaktstellen zu benachbarten Säulen (4, 13) aufweisen und in Blickrichtung entlang einer Längsachse einer Säule (4, 13) eine Summe aller Kontaktstellen entlang eines Umfangs der Säule (4, 13) gründsätzlich kleiner ist als die Hälfte des Umfangs der Säule (4, 13),
**dadurch gekennzeichnet, dass** die Säulen (4) einen Hohlraum (11) aufweisen, der einen Abstand zum Substrat aufweist, und das Material der Säulen (4) unterhalb des Hohlraums dicht, also nicht porös, ist.

2. System nach dem vorhergehenden Anspruch, **dadurch gekennzeichnet, dass** das keramische Material der Wärmedämmschicht beim Substrat (1) dicht, also nicht porös, ist.

3. System nach einem der vorhergehenden Ansprüche, **dadurch gekennzeichnet, dass** der Durchmesser der Säulen (4, 13) größer als 0,1 mm, vorzugsweise größer als 0,3 mm, ist und/ oder dass der Durchmesser der Säulen (4, 13) kleiner als 0,9 mm, vorzugsweise kleiner als 0,7 mm, ist.

4. System nach einem der vorhergehenden Ansprüche, **dadurch gekennzeichnet, dass** die Säulen (4) eine Verbreiterung (15) aufweisen.

5. System nach dem vorhergehenden Anspruch, **dadurch gekennzeichnet, dass** die Säulen (4) oberhalb des Substrats (1) durch Verbreiterungen (15) schichtartig miteinander verbunden sind oder dass eine Schicht (14) auf die Säulen aufgebracht ist.

6. System nach einem der vorhergehenden Ansprüche, **dadurch gekennzeichnet, dass** die Wärmedämmschicht durch erste und zweite Säulen (4, 13) gebildet ist und die zweiten Säulen (13) auf den ersten Säulen (4) aufgebracht sind und die zweiten Säulen (13) gegenüber den ersten Säulen (4) versetzt angeordnet sind.

7. System nach einem der vorhergehenden Ansprüche, **dadurch gekennzeichnet, dass** die Oberseite des Substrats (1) durch eine Haftvermittlerschicht (3) oder durch eine keramische Schicht (12) auf einer Haftvermittlerschicht (3) gebildet ist,
insbesondere wobei die Haftvermittlerschicht (3) auf einem aus einem Metall bestehenden Bauteil (2) aufgebracht ist.

8. System nach einem der vorhergehenden Ansprüche, **dadurch gekennzeichnet, dass** die Wärmedämmschicht aus Yttrium stabilisiertem Zirconiumoxid besteht.

9. System nach einem der vorhergehenden Ansprüche, **dadurch gekennzeichnet, dass** die Säulen (4, 13) durch Laserschweißen herstellbar sind.

10. System nach einem der vorhergehenden Ansprüche, **dadurch gekennzeichnet, dass** die Säulen (4, 13) gemäß einem gleichförmigen Muster angeordnet sind.

11. Verfahren zur Herstellung eines Systems nach einem der vorhergehenden Ansprüche, **dadurch gekennzeichnet, dass** eine keramische Säule (4, 13) der Wärmedämmschicht aus einem Pulver hergestellt wird, das durch Licht (7) eines Lasers (8) verschweißt wird, **dadurch gekennzeichnet, dass** der Laser (8) und/oder eine das Licht des Lasers (8) fokussierende Optik (9) während des Schweißens von der Substratoberfläche (3) wegbewegt werden und zwar senkrecht oder zumindest im Wesentlichen senkrecht oder schräg.

12. Verfahren nach dem vorhergehenden Anspruch, **dadurch gekennzeichnet, dass** das Wegbewegen des Lasers (8) und/oder der Optik (9) gebremst wird und nach dem Bremsen der Laser (8) ausgeschaltet wird.

13. Verfahren nach einem der zwei vorhergehenden Ansprüche, **dadurch gekennzeichnet, dass** das Pulver mithilfe von Laserpulsen verschweißt wird und die Zeit zwischen zwei Laserpulsen 1 bis 5 Sekunden beträgt,
insbesondere wobei während der Zeit zwischen zwei Pulsen der Laser (8) und/oder eine das Licht des Lasers (8) fokussierende Optik (9) von der Substratoberfläche wegbewegt wird und zwar senkrecht oder zumindest im Wesentlichen senkrecht.

14. Verfahren nach einem der zwei vorhergehenden Ansprüche, **dadurch gekennzeichnet, dass** in der Zeit zwischen zwei Laserpulsen das Pulvermaterial gewechselt wird.

15. Verfahren nach einem der zwei vorhergehenden Ansprüche, **dadurch gekennzeichnet, dass** die Dauer eines Laserpuls 0,1 bis 0,5 Sekunden lang ist.

## Claims

1. System comprising a substrate (1) and a ceramic thermal barrier layer formed of columns (4, 13) which is applied to the substrate (1), wherein, at the substrate (1), the columns (4, 13)
- are spatially separated from each other, i.e., do not contact one another, or
- at least hardly contact each other, i.e., the columns (4, 13) have up to six contact points with adjacent columns (4, 13) and, when viewed along the longitudinal axis of a column (4, 13), a sum of all contact points along the circumference of the column (4, 13) is in principle less than half the circumference of the column (4, 13),
**characterized in that** the columns (4) have a cavity (11) spaced from the substrate, and the material of the columns (4) below the cavity is dense, i.e., non-porous.

2. System according to the preceding claim, **characterized in that** the ceramic material of the thermal barrier layer is dense, i.e. non-porous, at the substrate (1).

3. System according to one of the preceding claims, **characterized in that** the diameter of the columns (4, 13) is larger than 0.1 mm, preferably larger than 0.3 mm, and/or that the diameter of the columns (4, 13) is smaller than 0.9 mm, preferably smaller than 0.7 mm.

4. System according to one of the preceding claims, **characterized in that** the columns (4) have a widening (15).

5. System according to the preceding claim, **characterized in that** the columns (4) are connected to each other in a layer-like manner by widenings (15) above the substrate (1) or that a layer (14) is applied to the columns.

6. System according to one of the preceding claims, **characterized in that** the thermal barrier layer is formed by first and second columns (4, 13) and the second columns (13) are applied to the first columns (4) and the second columns (13) are arranged offset with respect to the first columns (4).

7. System according to one of the preceding claims, **characterized in that** the upper side of the substrate (1) is formed by an adhesion promoter layer (3) or by a ceramic layer (12) on an adhesion promoter layer (3),
in particular wherein the adhesion promoter layer (3) is applied to a component (2) consisting of a metal.

8. System according to one of the preceding claims, **characterized in that** the thermal barrier layer consists of yttrium-stabilized zirconium oxide.

9. System according to one of the preceding claims, **characterized in that** the columns (4, 13) are producible by laser welding.

10. System according to one of the preceding claims, **characterized in that** the columns (4, 13) are arranged according to a uniform pattern.

11. Method for producing a system according to one of the preceding claims, **characterized in that** a ceramic column (4, 13) of the thermal barrier layer is produced from a powder that is welded by light (7) of a laser (8), **characterized in that** the laser (8) and/or an optics (9) focusing the light of the laser (8) are moved away from the substrate surface (3) during the welding process, namely perpendicularly or at least substantially perpendicularly or obliquely.

12. Method according to the preceding claim, **characterized in that** the moving away of the laser (8) and/or the optics (9) is slowed down and after slowing down the laser (8) is switched off.

13. Method according to one of the two preceding claims, **characterized in that** the powder is welded by means of laser pulses and the time between two laser pulses is 1 to 5 seconds,
in particular wherein, during the time between two pulses, the laser (8) and/or an optics (9) focusing the light of the laser (8) is moved away from the substrate surface, namely perpendicularly or at least substantially perpendicularly.

14. Method according to one of the two preceding claims, **characterized in that** the powder material is changed in the time between two laser pulses.

15. Method according to one of the two preceding claims, **characterized in that** the duration of a laser pulse is 0.1 to 0.5 seconds long.

## Revendications

1. Système avec un substrat (1) et une couche céramique d'isolation thermique, formée de colonnes (4, 13), appliquée sur le substrat (1), dans lequel les colonnes (4, 13), au niveau du substrat (1),
- sont spatialement séparées les unes des autres, c'est-à-dire ne se touchent pas, ou
- au moins se touchent à peine, c'est-à-dire que les colonnes (4, 13) présentent jusqu'à six points de contact aux colonnes voisines (4, 13) et, dans une ligne de vue le long d'un axe longitudinal d'une colonne (4, 13), une somme de tous les points de contact le long d'une circonférence de la colonne (4, 13) est en principe inférieure à la moitié de la circonférence de la colonne (4, 13),
**caractérisé en ce que** les colonnes (4) présentent un espace creux (11) qui est à une distance du substrat, et que le matériau des colonnes (4) en dessous de l'espace creux est dense, donc non poreux.

2. Système selon la revendication précédente, **caractérisé en ce que** le matériau céramique de la couche d'isolation thermique, au niveau du substrat (1), est dense, donc non poreux.

3. Système selon l'une des revendications précédentes, **caractérisé en ce que** le diamètre des colonnes (4, 13) est supérieur à 0,1 mm, de préférence supérieur à 0,3 mm, et/ou que le diamètre des colonnes (4, 13) est inférieur à 0,9 mm, de préférence inférieur à 0,7 mm.

4. Système selon l'une des revendications précédentes, **caractérisé en ce que** les colonnes (4) présentent un élargissement (15).

5. Système selon la revendication précédente, **caractérisé en ce que** les colonnes (4), au-dessus du substrat (1), sont reliées entre elles semblables à des couches par élargissement (15), ou qu'une couche (14) est appliquée sur les colonnes.

6. Système selon l'une des revendications précédentes, **caractérisé en ce que** la couche d'isolation thermique est formée par des premières et deuxièmes colonnes (4, 13), et que les deuxièmes colonnes (13) sont appliquées sur les premières colonnes (4), et les deuxièmes colonnes (13) sont disposées de manière décalée par rapport aux premières colonnes (4).

7. Système selon l'une des revendications précédentes, **caractérisé en ce que** la face supérieure du substrat (1) est formée par une couche promoteur d'adhérence (3), ou par une couche céramique (12) sur une couche promoteur d'adhérence (3), en particulier dans lequel la couche promoteur d'adhérence (3) est appliquée sur un composant (2) constitué d'un métal.

8. Système selon l'une des revendications précédentes, **caractérisé en ce que** la couche d'isolation thermique est constituée d'oxyde de zirconium stabilisé par yttrium.

9. Système selon l'une des revendications précédentes, **caractérisé en ce que** les colonnes (4, 13) peuvent être fabriquées par soudage laser.

10. Système selon l'une des revendications précédentes, **caractérisé en ce que** les colonnes (4, 13) sont disposées selon un motif uniforme.

11. Procédé de fabrication d'un système selon l'une des revendications précédentes, **caractérisé en ce qu'**une colonne céramique (4, 13) de la couche d'isolation thermique est fabriquée à partir d'une poudre qui est soudée par de la lumière (7) d'un laser (8), **caractérisé en ce que** le laser (8) et/ou une optique (9) focalisant la lumière du laser (8) sont déplacés à l'écart de la surface du substrat (3) lors du soudage, à savoir verticalement, ou du moins substantiellement verticalement ou obliquement.

12. Procédé selon la revendication précédente, **caractérisé en ce que** le déplacement à l'écart du laser (8) et/ou de l'optique (9) est freiné, et après freinage, le laser (8) est éteint.

13. Procédé selon l'une des deux revendications précédentes, **caractérisé en ce que** la poudre est soudée au moyen d'impulsions laser, et que le temps entre deux impulsions laser est de 1 à 5 secondes,
en particulier dans lequel, pendant le temps entre deux impulsions, le laser (8) et/ou une optique (9) focalisant la lumière du laser (8) est déplacé à l'écart de la surface du substrat, à savoir verticalement ou du moins substantiellement verticalement.

14. Procédé selon l'une des deux revendications précédentes, **caractérisé en ce que** la poudre est changée pendant le temps entre deux impulsions laser.

15. Procédé selon l'une des deux revendications précédentes, **caractérisé en ce que** la durée d'une impulsion laser est de 0,1 à 0,5 seconde.
